# EUROPÄISCHE PATENTSCHRIFT

(11) **EP 0 487 999 B1**
(45) Veröffentlichungstag und Bekanntmachung des Hinweises auf die Patenterteilung: **16.04.1997**
(21) Anmeldenummer: 91119583.2
(22) Anmeldetag: 16.11.1991
(51) Int. Cl.: H04M 1/65

(54) **Teilnehmerendeinrichtung mit verbesserter Sprachqualität gespeicherter Ansagen**
Subscriber equipment with stored messages of improved speech quality
Equipement d'abonné délivrant des messages mémorisés avec une meilleure qualité de parole

(30) Priorität: 26.11.1990 DE 4037514
(43) Veröffentlichungstag der Anmeldung: 03.06.1992
(73) Patentinhaber: Grundig E.M.V. Elektro-Mechanische Versuchsanstalt Max Grundig GmbH & Co. KG, 90762 Fürth (DE)
(72) Erfinder: Mittelstaedt, Rainer, Grundig E.M.V., W-8510 Fuerth (DE); Terkowski, Jürgen, Grundig E.M.V., W-8510 Fuerth (DE)

(56) Entgegenhaltungen:
- EP-A- 0 012 864
- GB-A- 2 143 705
- PATENT ABSTRACTS OF JAPAN vol. 014, no. 546 (E-1008)4. Dezember 1989 & JP-A-2233047

## Beschreibung

Die Erfindung betrifft eine Teilnehmerendeinrichtung, insbesondere einen Anrufbeantworter, gemäß dem Oberbegriff des Patentanspruchs 1 oder 2.

Im zunehmenden Maße werden in der Teilnehmereinrichtung eines Nachrichtensystems Gerätekombinationen benutzt, meistens bestehend aus Fernsprechapparat, Anrufbeantworter und Telekopierer. Beispielsweise ist aus der DE-OS 38 44 425 ein Telekopierer mit integriertem Anrufbeantworter bekannt.

Wie Untersuchungen ergeben haben, kommt der Sprachkommunikation nach wie vor hohe Bedeutung zu, so daß auch bei zukünftigen Gerätekombinationen das Umsteuern in den Anrufbeantworterbetrieb möglich sein wird. Kommt beispielsweise über die Hauptanschlußleitung zur Gerätekombination ein Rufsignal an, so wird mittels einer in der Gerätekombination angeordneten Ruferkennungsschaltung und einer damit verbundenen Steuereinrichtung die Kommunikationsart, z.B. Anrufbeantworter- oder Telekopierer-Betrieb, ermittelt und ein Ansagetext zum rufenden Teilnehmer über das Nachrichtennetz übertragen. Als Massenspeicher für die Ansage und für die Aufzeichnung der gesprochenen Nachricht des anrufenden Teilnehmers wurde meist ein Magnetband-Speicher benutzt.

Im Laufe der Entwicklung von Speichertechnologien wurde untersucht, ob nicht auch andere Speichertypen für den Einsatzfall Sprachspeicherung günstiger sind. Bestimmend für den Einsatz des jeweiligen Speichertyps von digitalen Speichern sind im wesentlichen die Speicherkapazität, die Zugriffszeit, die Kosten pro Bit oder Byte und die Flüchtigkeit der gespeicherten Daten.

Während beim Magnetbandspeicher der Speicherplatz nicht direkt erreicht werden kann, sondern der Zugriff vom Ort der Speicherplätze abhängig ist, kann bei einem wahlfreien Zugriff (Random Access) ein bestimmter Speicherplatz (z.B. 2. Zeile, 6. Spalte) des digitalen Speichers durch die Adresse erreicht werden. Magnetbandspeicher werden in der Regel dort benutzt, wo es nicht auf kurze Zugriffszeiten ankommt, wobei von Vorteil die geringen Kosten pro Bit durch die hohe Aufzeichnungsdichte (man rechnet hier mit Mikro-Pfennigen pro Bit) und die Nichtflüchtigkeit der Daten sind.

Auch die Eignung von flüchtigen Schreib-/Lese-Speichern, z.B. Halbleiterspeicher, wurde untersucht. Vorteile der Halbleiterspeicher sind die kurze Zugriffszeit, die hohe Packungsdichte, die einfache Verknüpfung mit anderen Halbleiterbausteinen sowie die einfache Möglichkeit der Speichererweiterung. In der Regel werden dynamische oder statische Schreib-/Lese-Speicher benutzt.

Der Einsatz von Magnetband-Speichern und/oder von digitalen Speichern zur Speicherung von Sprachtexten in einem Anrufbeantworter ist beispielsweise in der DE-AS 28 54 516, DE-PS 31 04 564, DE-PS 31 04 565, DE-OS 31 18 420, DE-PS 31 19 080 ausführlich beschrieben. Auch elektrisch programmierbare und löschbare Festwertspeicher (EEPROM, Electrically Erasable Programmable Read Only Memory) können benutzt werden, wie dies in der DE-OS 31 19 226 oder der DE-PS 32 14 249 erläutert ist.

Das beim Schreib-/Lese-Vorgang angewandte Verfahren, insbesondere die Ausgestaltung der Speicheradressierung beim Aufsprechen des Ansagetextes, ist in der EP-B1-0 012 864 ausführlich beschrieben. Der Festkörperspeicher für den Ansagetext ist wahlweise mit einem Meldetext-Bereich, einem Absagetext-Bereich und einem Beantwortungstext-Bereich oder mit nur einem Ansagetext-Bereich betreibbar. Die einzelnen Speicherbereiche sind direkt adressierbar. Zur Adressierung der Speicherplätze der einzelnen Speicherbereiche (bei der Aufnahme bzw. Wiedergabe der einzelnen Textabschnitte) ist ein Zähler vorgesehen, dem ein Takt zugeführt wird. Weiterhin ist im Fernsprechapparat ein Magnetbandspeicher angeordnet, welcher zur Aufzeichnung der Nachricht des anrufenden Teilnehmers dient. Bei Netzausfall (Lichtnetz) wird die im flüchtigen Festkörperspeicher (beispielsweise D-RAM, Dynamic Random Access Memory) gespeicherte Ansage gelöscht. Um sicherzustellen, daß bei wiederkehrender Netzspannung die Ansage wieder zur Verfügung steht, wird diese beim Einsprechen in das Mikrofon gleichzeitig im digitalen Speicher und im Magnetbandspeicher gespeichert. Bei Wiederkehr der Netzspannung überträgt die Steuereinrichtung dann mittels eines speziellen Ausfallsteuerprogramms die Ansage vom Magnetbandspeicher in den digitalen Speicher. Zu diesem Zweck ist im Verbindungsweg zwischen dem Ausgang des Magnetbandspeichers (oder A/D-Umsetzers) und Eingang des digitalen Speichers ein Schalter angeordnet. Dieser wird durch die Steuereinrichtung geschlossen, sobald der Magnetbandspeicher am Anfang des Ansagetextes steht.

Um die zur digitalen Speicherung des Sprachsignals im Festkörperspeicher erforderliche Speicherkapazität gering zu halten, wird zur analog-digital Umsetzung des Sprachsignals beim Gegenstand der EP-B1-0 012 864 ein Delta-Modulator benutzt. Wie ausführlich erläutert ist, läßt sich dadurch die zur Erzeugung einer guten Sprachqualität erforderliche Datenrate auf ca. 12 kbit/s verringern. Weiterhin ist unmittelbar vor dem Eingang des digitalen Speichers eine Verzögerungsschaltung eingefügt, die das digitale Sprachsignal mindestens um die Ansprechzeit bzw. Detektionszeit einer Diskriminatorschaltung (dient zur Erkennung eines digitalen Sprachsignals) verzögert.

Weitere Einzelheiten zur schaltungstechnischen Realisierung, insbesondere der digitalen Sprachverarbeitung, sind in der Zeitschrift "Telcom Report 7 (1984), Heft 5, Seiten 296 bis 301 beschrieben. Dabei wird von dem Anwendungsfall "Telefon mit eingebautem elektronischem Anrufbeantworter" ausgegangen, wobei in der Gerätekombination ein elektronischer Sprachspeicher und Mittel zur digitalen Sprachverarbeitung angeordnet sind. Das Sprachsignal (NF-Signal) wird dort ebenfalls unter Benutzung des Verfahrens der Delta-Modulation in den digitalen Speicher gespeichert. Eine Schaltung zur Unterdrückung von Sprechpausen sorgt dafür, daß eine Ansage in natürlicher Sprache mit einer Sprechzeit von z.B. 20 Sekunden eine entsprechende Speicherzeit von nur etwa 16 Sekunden benötigt. Diese Methode zur Speicherplatzersparnis wird auch bei der Speicherung von Standard-Sprachmodulen oder kundenspezifischen Sprachmodulen benutzt. Die in Kassettenform aufgebauten Sprachmodule mit Standardtexten haben zusätzlich zwei Codierschalter zur Einstellung der Wochentage und der Uhrzeit in Stunden, wodurch sich 128 verschiedene Textmöglichkeiten ergeben. Zum Auslesen der Ansage werden von einer Mikroprozessorsteuerung die Adressen über einen Datenbus dem digitalen Speicher zugeführt. Mit Hilfe des Read-Signals werden die Sprachdaten über den Datenbus zum Parallel-Serien-Umsetzer, und von diesem in serieller Form dem Delta-Modulator übermittelt. Die bei der Speicherung verkürzten Sprachpausen werden mittels der Mikroprozessorsteuerung wieder auf die ursprüngliche Pausenlänge gebracht.

Für die digital-analog Umsetzung benötigt der Delta-Modulator einen externen Takt mit einer Frequenz von 31,25 kHz. Die Bitrate beträgt demzufolge 31,25 kbit/s und die für ein 8-bit-Zeichen benötigte Mikroprozessorverarbeitungszeit beträgt 250 µs. Das Ausgangssignal des Deltamodulators wird einem Bandpaß zugeführt, an dessen Ausgang dann wieder das rekonstruierte niederfrequente Sprachsignal zur Verfügung steht.

Weiterhin ist beim Gegenstand der JP-A-2233047 ein weiterer Weg aufgezeigt, wie das Kopieren der Ansage von einem Magnetbandspeicher in einen digitalen Speicher nach Wiederkehr der Netzspannung durchführbar ist. Hierzu wird die Ansage zuerst mit hoher Kopiergeschwindigkeit (32 kbit/s) überspielt. Für den Fall, daß die Speicherkapazität des digitalen Speichers nicht ausreichend ist, wird ein erneuter Kopiervorgang eingeleitet, bei dem die Kopiergeschwindigkeit um den Faktor 2 (16 kbit/s) reduziert ist.

Wie Untersuchungen ergeben haben, ist die Sprachqualität einer nach dieser Methode gespeicherten Ansage ausreichend, wenn diese in einem herkömmlichen analogen Fernsprechnetz über die Fernmeldeleitung übertragen wird. In zukünftigen digitalen Fernsprechendgeräten, welche über zwei Leitungsadern an PCM-Vermittlungen angeschlossen sind, stehen in jeder Richtung ein 64-kbit/s-Nutzkanal zur Verfügung. Über diesen 64-kbit/s-Nutzkanal kann eine Sprachkommunikation mit hoher Übertragungsqualität erfolgen. In der Bundesrepublik Deutschland wurden die ersten ISDN-Teilnehmeranschlüsse (ISDN, Integrated Services Digital Network) im Dezember 1988 in Betrieb genommen und bis zum Februar 1990 waren fast 60 Ortsnetze mit ISDN versorgt. Bis 1993 soll nach Plänen der Telekom eine Flächendeckung in der Weise erreicht werden, daß sich Anschlußwünsche in jedem Ort und jeder Region der Bundesrepublik Deutschland erfüllen lassen. Unter Berücksichtigung dieser Entwicklung ist es deshalb anzustreben, daß auch eine verbesserte Sprachqualität gespeicherter Ansagen erreichbar ist, wobei die Kompatibilität zwischen zwei an einer Verbindung beteiligten Geräte sichergestellt ist.

Der Erfindung liegt die Aufgabe zugrunde, die Speicherung der Ansage in einem digitalen Speicher bei einer gattungsgemäßen Teilnehmerendeinrichtung derart vorzunehmen, daß eine hohe Sprachqualität erreichbar ist und daß auf einfache Art und Weise eine Anpassung an zukünftige Nachrichtenübertragungssysteme erfolgen kann.

Diese Aufgabe wird bei einer gattungsgemäßen Teilnehmerendeinrichtung durch die kennzeichnenden Merkmale des Patentanspruchs 1 oder 2 gelöst.

Die erfindungsgemäße Teilnehmerendeinrichtung nach Patentanspruch 1 weist den Vorteil auf, daß auf überraschend einfache Art und Weise die Sprachqualität gespeicherter Ansagen erheblich verbessert werden kann. Üblicherweise werden als Sprachspeicher 1-MBit-DRAM benutzt, welche besonders kostengünstig im Handel erhältlich sind. Der Erfindung lag dabei die Erkenntnis zugrunde, daß in der Regel die im digitalen Speicher enthaltene(n) Ansage(n) kürzer als die bei einer Bitrate von 32 kbit/s zur Verfügung stehende Sprechzeit von ca. 30 Sekunden ist (sind). Ist die für die Ansage(n) benötigte Sprechzeit kürzer als 15 Sekunden, so kann diese Ansage mit hoher Sprachqualität, (nämlich mit 64 kbit/s) gespeichert, ausgelesen und im 64-kbit/s-Nutzkanal des ISDN-Fernmeldenetzes übertragen werden.

Die Teilnehmerendeinrichtung gemäß Patentanspruch 2 weist den Vorteil auf, daß auf einfache Art und Weise die Anpassung der Sprachqualität an die Länge der jeweiligen Ansage erfolgen kann. Ebenso wie beim Gegenstand nach Patentanspruch 1 können bereits beim Überspielvorgang die Umfeldbedingungen der Teilnehmerendeinrichtung, insbesondere die Datenraten des an die Teilnehmerendeinrichtung angeschlossenen Fernmeldenetzes mit berücksichtigt werden.

Beide Ausführungsformen gemäß Patentanspruch 1 und 2 gehen von der gleichen Schaltungsanordnung aus, wobei der zusätzliche Schaltungsaufwand zur Verbesserung der Sprachqualität relativ gering ist. Dies ist darauf zurückzuführen, daß ohnehin für den Netzspannungsausfall (vgl. EP-B1-0 012 864) vorgesehene Mittel mitbenutzt werden können, so daß der zusätzliche Schaltungsaufwand im wesentlichen durch die Mittel zur Veränderung der Taktfrequenz bestimmt wird.

Ist gemäß der Ausführungsform nach Patentanspruch 3 zwischen A/D-Umsetzer und Magnetbandspeicher ein Schalter angeordnet, so kann auf einfache Art und Weise entweder automatisch oder entsprechend dem Wunsch des Benutzers der Überspielvorgang eingeleitet werden. Im Falle der gleichzeitigen Speicherung des Ansagetextes im digitalen Speicher und Magnetbandspeicher gemäß Patentanspruch 1 besteht die Möglichkeit, nur im Bedarfsfall den Überspielvorgang durchzuführen.

Die Teilnehmerendeinrichtung gemäß Patentanspruch 4 weist den Vorteil auf, daß der Schaltungsaufwand zur Veränderung der Taktfrequenz des externen Taktes (Umschaltung zwischen der Taktfrequenz 32 kHz oder 64 kHz) gering ist. Weiterhin ist von Vorteil, daß der Benutzer trotz der fest vorgegebenen Gesamtspeicherkapazität, entsprechend seinem Wunsch, bestimmte Teile des Ansagetextes mit hoher Sprachqualität, dagegen weniger wichtiger Teile des Ansagetextes mit geringerer Sprachqualität abspeichern kann.

Die Erfindung wird im folgenden anhand einer in der Zeichnung dargestellten Ausführungsform näher beschrieben und erläutert.

Es zeigen:
- Fig. 1: eine Ausführungsform der erfindungsgemäßen Teilnehmerendeinrichtung in Ansicht und
- Fig. 2: das Blockschaltbild der Ausführungsform nach Fig.1.

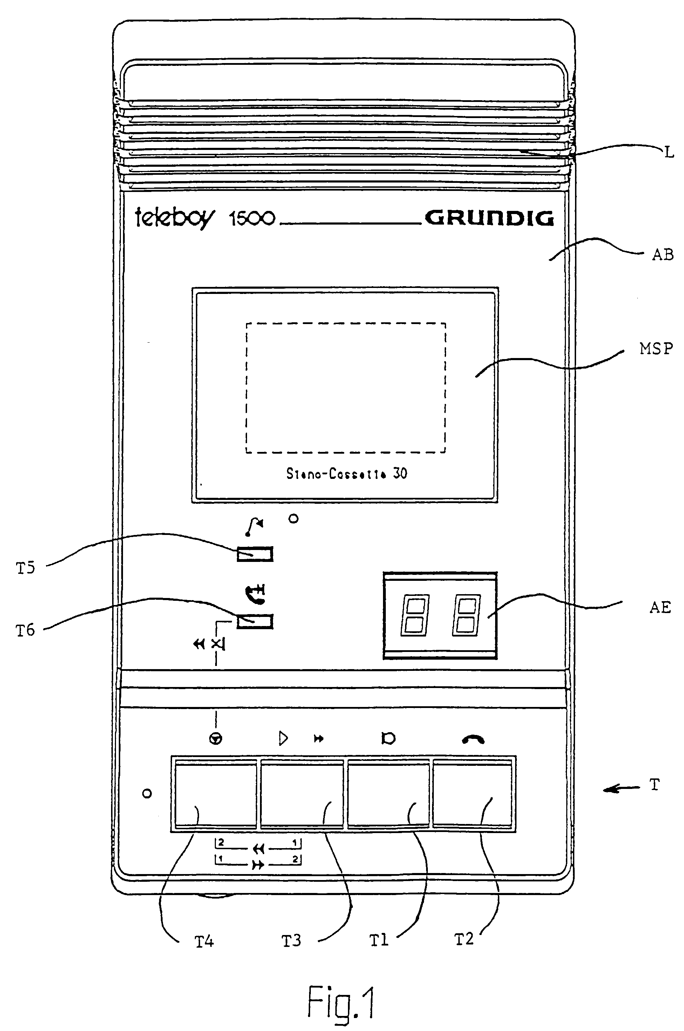

Bei der in Fig. 1 dargestellten Ausführungsform wird als Anwendungsfall von einem Anrufbeantworter ausgegangen, wobei der anrufende Teilnehmer verschiedene Ansagetexte erhalten kann. Anstelle von Sprachdaten, welche gespeichert werden, kann es sich bei diesem Anwendungsfall auch um Textdaten handeln, die ausgelesen, über das Nachrichtennetz übertragen und an der Anzeigeeinheit des Komforttelefons des anrufenden Teilnehmers angezeigt werden.

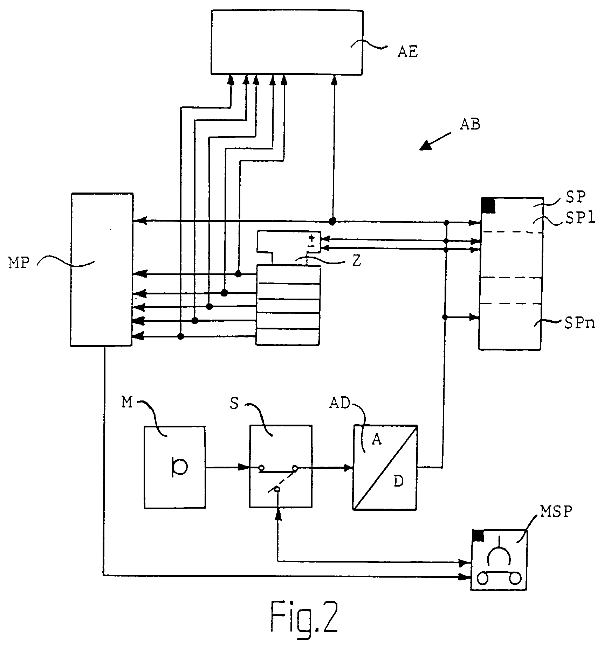

Erfindungsgemäß weist der Anrufbeantworter AB einen digitalen Speicher SP (vgl. Fig. 2), gegebenenfalls mit mindestens zwei Speicherbereichen variabler Größe für die Aufnahme kundenspezifischer Ansagetexte auf. Weiterhin enthält der Anrufbeantworter AB eine Anzeigeeinheit AE, an welcher der belegte Teil relativ zur Gesamtkapazität des jeweiligen Speicherbereichs (SP1, ..., SPn) angezeigt wird. Weitere an der Anzeigeeinheit AE dargestellte Informationen sind beispielsweise die Anruf- und Nachrichtenzählung, die Textwahlanzeige, die Anzeige der Restspielzeit, Codes für Gerätefunktionen, Fehler und Fernabfrage, Bandpositionierung usw. Zur Steuerung der verschiedenen Betriebsfunktionen des Anrufbeantworters AB in den verschiedenen Betriebsarten, z.B. "Nur-Anrufbeantwortung"; "Anrufbeantwortung mit Aufzeichnung und Fernabfrage";" Abhören aufgezeichneter Nachrichten"; "Diktierbetrieb" und "Konferenzbetrieb", sind vom Benutzer entsprechende Bedienelemente T1 bis T4 und T6 zu betätigen. Beispielsweise betätigt der Benutzer zur Aufzeichnung eines Ansagetextes zuerst die Taste T1 und anschließend die Taste T2 oder für die Aufzeichnung eines Diktats zuerst wieder die Taste T1 und anschließend die Taste T3. Durch Betätigen der Taste T2 kann vom Benutzer die aufgezeichnete Nachricht, d.h. die Ansage oder das Diktat, abgehört werden. Die Lautsprecher L sind im flachen pultförmigen Gehäuse des Anrufbeantworter AB unter den Kühlschlitzen bzw. dem anschließenden Lautsprechergrill angeordnet. Neben dem Lautsprecher L ist das Laufwerk für den Magnetbandspeicher MSP (Aufzeichnungskassette) angeordnet, welches von der Steuereinrichtung MP (vgl. Fig. 2) angesteuert wird. Vor dem Kassettenfach ist eine Kassettenfachtaste T5 angeordnet, welche vom Benutzer zum Kassettenwechseln zu betätigen ist. Unterhalb dieser Taste T5 befindet sich eine weitere Taste T6. Diese ist vom Benutzer für das Mitschneiden von Telefonkonferenzen zu betätigen.

Fig. 2 zeigt in Form eines Blockschaltbilds weitere Einzelheiten der erfindungsgemäßen Teilnehmerendeinrichtung. Die Länge der über Mikrofon M, A/D-Umsetzer AD dem jeweiligen Speicherbereich SP1, ..., SPn zugeführten Ansagetexte ist direkt proportional zum Zählerstand eines mit dem digitalen Speicher SP verbundenen Vorwärts-/Rückwärtszählers Z.

Bei der in Fig. 2 dargestellten Ausführungsform ist der digitale Schreib-/Lesespeicher SP ein serieller Halbleiterspeicher, beispielsweise ein DRAM mit 1 Mbit Gesamtspeicherkapazität. Die Steuereinrichtung MP steuert anhand des jeweiligen Zählerstands am Ende des Ansagetextes den jeweiligen Speicherbereich SP1, ..., SPn an und leitet daraus ein Kriterium zur automatischen Umschaltung der Betriebsart des Anrufbeantworters AB ab (d.h. Abhörautomatik für die Ansagetexte, Auskunftgeberfunktion; Ansage ABA, d.h. Meldung, Mitteilung und Schlußansage mit mindestens 3 Sekunden und maximal 30 Sekunden; Ansage AB, d.h. Meldung, Mitteilung mit mindestens 3 Sekunden und maximal 30 Sekunden; Ansage vom SP und Auskunft vom MSP usw.).

Als Anzeigeeinheit AE wird bei der in der Fig. 2 dargestellten Ausführungsform eine Segmentanzeige benutzt, welche mit dem Vorwärts-/Rückwärtszähler Z und der Steuereinheit MP verbunden ist. Der Vorwärts-/Rückwärtszähler Z kann während eines Initialisierungslaufs zur Ermittlung der Gesamtspeicherkapazität des digitalen Speichers SP benutzt werden. Von der Steuereinrichtung MP wird der jeweilige Zählwert am Ende des Initialisierungslaufs zur Ermittlung der jeweils fest vorgegebenen Grenzen der verschiedenen Speicherbereiche benutzt. Vor dem Aufsprechen eines Ansagetextes werden an der Anzeigeeinheit AE alternierend Anfangszählwert, entsprechend der maximalen Speicherbereichsgröße bzw. der zur Verfügung stehenden maximalen Sprechdauer, und Mindestzählwert, entsprechend der fest vorgegebenen Grenze des Speicherbereichs, angezeigt. Beim Aufsprechen des Ansagetextes selbst wird der jeweilige Momentanzählwert entsprechend der noch zur Verfügung stehenden Zeitdauer für den jeweiligen Ansagetext angezeigt, wobei der Vorwärts-/Rückwärtszähler Z rückwärts zählt.

Gemäß einer ersten Ausführungsform der erfindungsgemäßen Teilnehmerendeinrichtung wird die jeweilige Ansage beim Einsprechen in das Mikrofon M gleichzeitig dem digitalen Speicher SP und dem Magnetbandspeicher MSP zugeführt. Die Steuereinrichtung MP ermittelt am Ende des Ansagetextes die noch zur Speicherung von digitalen Sprachsignalen zur Verfügung stehende Speicherkapazität des digitalen Speichers SP. Diese gegebenenfalls noch zur Verfügung stehende Speicherkapazität bzw. Sprechdauer wird an der Anzeigeeinheit AE dargestellt. Ist der digitale Speicher SP noch nicht vollständig gefüllt, so kann entweder automatisch durch die Steuereinrichtung MP oder handbetätigt der Überspielvorgang eingeleitet werden, indem ein zwischen A/D-Umsetzer AD und Magnetbandspeicher MSP angeordneter Schalters geschlossen wird. Beim Überspielen der Ansage aus dem Magnetbandspeicher MSP in den digitalen Speicher SP (im Falle freier Sprachkapazität des digitalen Speichers SP) wird die Frequenz des Abtasttakts für den A/D-Umsetzer AD derart verändert, daß der digitale Speicher SP durch die Ansage weitgehend gefüllt ist. Die Steuereinrichtung MP kann aus den bereits beim Initialisierungslauf ermittelten Werten die hierzu erforderliche Veränderung des Abtasttaktes berechnen.

Bei der zweiten Ausführungsform der erfindungsgemäßen Teilnehmerendeinrichtung wird beim Einsprechen der jeweiligen Ansage in das Mikrofon M diese zuerst im Magnetbandspeicher MSP gespeichert. In entsprechender Weise ermittelt die Steuereinrichtung MP am Ende des Ansagetextes die für die Ansage benötigte Sprechzeit und stellt diese an der Anzeigeeinheit AE dar. Aus den in entsprechender Weise ermittelten Werten verändert die Steuereinrichtung MP nun die Frequenz des Abtastakts für den A/D-Umsetzer AD derart, daß beim Überspielen der Ansage aus dem Magnetbandspeicher MSP in den digitalen Speicher SP, dieser weitgehend gefüllt ist.

Um den Schaltungsaufwand zur Veränderung der Frequenz des Abtasttakts zu reduzieren, kann bei einer vereinfachten Ausführungsform einem Delta-Modulator DM ein zwischen den Werten 32 kHz und 64 kHz umschaltbarer Abtasttakt zugeführt werden. Liegt die für die Ansage benötigte Sprechzeit derart, daß der digitale Speicher SP nur halb oder weniger gefüllt ist, kann für den gesamten Überspielvorgang eine Umschaltung von 32 kHz auf 64 kHz erfolgen. Ist bereits mehr als die Hälfte der Speicherkapazität des digitalen Speichers SP belegt, so kann gegebenenfalls nur für Teile des Ansagetextes zwischen den beiden Frequenzen umgeschaltet werden.

Die erfindungsgemäße Teilnehmereinrichtung ist vielfältig für die Aufzeichnung und Wiedergabe beliebiger Nachrichten zu einem anrufenden Teilnehmer einsetzbar, erfordert für die Verbesserung der Sprachqualität von in einem digitalen Speicher gespeicherter Ansagen einen vergleichsweise geringen zusätzlichen Schaltungsaufwand (durch die Mitbenutzung von ohnehin für Netzspannungsausfall vorgesehene Mittel) und bietet zudem die Möglichkeit der Signalanpassung (Formatwandler im Hinblick auf ISDN).

## Patentansprüche

1. Teilnehmerendeinrichtung, insbesondere Anrufbeantworter (AB), mit einer Steuereinrichtung, insbesondere einem Mikroprozessor (MP), welcher die verschiedenen Gerätefunktionen der Teilnehmerendeinrichtung (AB) und den Austausch vermittlungstechnischer Informationen zwischen Teilnehmerendeinrichtung (AB) und Vermittlungsstelle des Nachrichtensystems steuert, mit einem Magnetbandspeicher (MSP) und einem digitalen Speicher (SP) zur Speicherung von Sprachsignalen, mit einem Mikrofon (M) und mit einem mit Mikrofon (M) und digitalem Speicher (SP) verbundenen A/D-Umsetzer (AD), wobei die jeweilige Ansage beim Einsprechen in das Mikrofon (M) gleichzeitig dem digitalen Speicher (SP) und dem Magnetbandspeicher (MSP) zugeführt wird und die Steuereinrichtung (MP) am Ende des Ansagetextes die noch zur Speicherung von digitalen Sprachsignalen zur Verfügung stehende Speicherkapazität des digitalen Speichers (SP) ermittelt und an einer Anzeigeeinheit (AE) darstellt,
**dadurch gekennzeichnet**, daß
mit der Steuereinrichtung (MP) ein Vorwärts-/Rückwärtszähler (Z) verbunden ist, welcher während eines Initialisierungslaufes, zusammen mit der Steuereinrichtung (MP), zur Ermittlung der Gesamtspeicherkapazität des digitalen Speichers (SP) dient und daß die Steuereinrichtung (MP) anhand der beim Initialisierungslauf ermittelten Werte die Frequenz des Abtasttakts für den A/D-Umsetzer (AD) derart verändert, daß beim Überspielen der Ansage aus dem Magnetbandspeicher (MSP) in den digitalen Speicher (SP) dieser weitgehend gefüllt ist.

2. Teilnehmerendeinrichtung, insbesondere Anrufbeantworter (AB), mit einer Steuereinrichtung, insbesondere einem Mikroprozessor (MP), welcher die verschiedenen Gerätefunktionen der Teilnehmereinrichtung (AB) und den Austausch vermittlungstechnischer Informationen zwischen Teilnehmerendeinrichtung (AB) und Vermittlungsstelle des Nachrichtensystems steuert, mit einem Magnetbandspeicher (MSP) und einem digitalen Speicher (SP) zur Speicherung von Sprachsignalen, mit einem Mikrofon (M) und mit einem mit Mikrofon (M) und digitalem Speicher (SP) verbundenen A/D-Umsetzer (AD), wobei die jeweilige Ansage beim Einsprechen in das Mikrofon (M) im Magnetbandspeicher (MSP) gespeichert wird,
**dadurch gekennzeichnet,**
daß mit der Steuereinrichtung (MP) ein Vorwärts-/Rückwärtszähler (Z) verbunden ist, welcher während eines Initialisierungslaufs, zusammen mit der Steuereinrichtung (MP), zur Ermittlung der Sprechzeit des Ansagetextes dient, daß die Steuereinrichtung (MP) an einer Anzeigeeinheit (AE) die Sprechzeit darstellt und daß die Steuereinrichtung (MP) anhand der beim Initialisierungslauf ermittelten Werte die Frequenz des Abtasttaktes für den A/D-Umsetzer (AD) derart verändert, daß beim Überspielen der Ansage aus dem Magnetbandspeicher (MSP) in den digitalen Speicher (SP) dieser weitgehend gefüllt ist.

3. Teilnehmerendeinrichtung nach Anspruch 1 oder 2,
**dadurch gekennzeichnet,** daß zwischen A/D-Umsetzer (AD) und Magnetbandspeicher (MSP) ein Schalter (S) angeordnet ist, um handbetätigt oder automatisch durch die Steuereinrichtung (MP) den Überspielvorgang einzuleiten.

4. Teilnehmerendeinrichtung nach einem oder mehreren der Ansprüche 1 bis 3,
**dadurch gekennzeichnet,** daß im A/D-Umsetzer (AD) ein Deltamodulator (DM) angeordnet ist, daß die Frequenz des dem Deltamodulator (DM) zugeführten Abtasttaktes zwischen 32 kHz und 64 kHz umschaltbar ist und daß beim Überspielen des Ansagetextes gegebenenfalls nur für Teile des Ansagetextes zwischen den beiden Frequenzen umgeschaltet wird.

## Claims

1. Subscriber terminal device, in particular answering machine (AB), comprising a control device, in particular a microprocessor (MP), which controls the various appliance functions of the subscriber terminal device (AB) and the exchange of switching information between subscriber terminal device (AB) and switching centre of the communications system, comprising a magnetic tape memory (MSP) and a digital memory (SP) for storing speech signals, comprising a microphone (M) and comprising an A/D converter (AD) connected to microphone (M) and digital memory (SP), the respective announcement on speaking into the microphone (M) being supplied simultaneously to the digital memory (SP) and the magnetic tape memory (MSP) and the control device (MP) determining at the end of the announcement text that memory capacity of the digital memory (SP) which is still available for storing digital speech signals and displaying it on an indicating unit (AE), characterized in that there is connected to the control device (MP) an up/down counter (Z) which serves together with the control device (MP) to determine the total memory capacity of the digital memory (SP) during an initialization run and in that the control device (MP) alters, on the basis of the values determined in the initialization run, the frequency of the sampling rate for the A/D converter (AD) in such a way that, when the announcement is copied from the magnetic tape memory (MSP) to the digital memory (SP), the latter is largely filled.

2. Subscriber terminal device, in particular answering machine (AB), comprising a control device, in particular a microprocessor (MP), which controls the various appliance functions of the subscriber device (AB) and the exchange of switching information between subscriber terminal device (AB) and switching centre of the communications system, comprising a magnetic tape memory (MSP) and a digital memory (SP) for storing speech signals, comprising a microphone (M) and comprising an A/D converter (AD) connected to microphone (M) and digital memory (SP), the respective announcement on speaking into the microphone (M) being stored in the magnetic tape memory (MSP),
characterized in that there is connected to the control device (MP) an up/down counter (Z) which serves together with the control device (MP) to determine the speaking time of the announcement text, in that the control device (MP) displays the speaking time on an indicating unit (AE) and in that the control device (MP) alters, on the basis of the values determined in the initialization run, the frequency of the sampling rate for the A/D converter (AD) in such a way that, when the announcement is copied from the magnetic tape memory (MSP) to the digital memory (SP), the latter is largely filled.

3. Subscriber terminal device according to Claim 1 or 2, characterized in that a switch (S) is disposed between A/D converter (AD) and magnetic tape memory (MSP) in order to initiate, by hand actuation or automatically, the copying operation by the control device (MP).

4. Subscriber terminal device according to one or more of Claims 1 to 3, characterized in that a delta modulator (DM) is disposed in the A/D converter (AD), in that the frequency of the sampling rate supplied to the delta modulator (DM) can be switched between 32 kHz and 64 kHz and in that, when the announcement text is copied, switching between the two frequencies is optionally carried out only for parts of the announcement text.

## Revendications

1. Équipement d'abonné, notamment répondeur téléphonique (AB), comportant un dispositif de commande, notamment un microprocesseur (MP), qui commande les différentes fonctions d'appareils de l'équipement d'abonné (AB) et l'échange d'informations techniques de commutation entre l'équipement d'abonné (AB) et le central du système de transmission de messages, comportant une mémoire à bande magnétique (MSP) et une mémoire numérique (SP) pour mémoriser des signaux vocaux, un microphone (M) et un convertisseur analogique/numérique (AD) relié au microphone (M) et à la mémoire numérique (SP), l'annonce respective lorsqu'on parle dans le microphone (M) étant envoyée simultanément à la mémoire numérique (SP) et à la mémoire à bande magnétique (MSP), et à la fin du texte d'annonce, le dispositif de commande (MP) détermine la capacité de la mémoire numérique (SP), qui est encore disponible pour la mémorisation de signaux vocaux numériques, et la représente sur une unité d'affichage (AE),
caractérisé en ce
qu'au dispositif de commande (MP) est relié un compteur progressif/régressif (Z) qui, pendant un cycle d'initialisation, sert conjointement avec le dispositif de commande (MP) à déterminer la capacité totale de la mémoire numérique (SP), et que, sur la base des valeurs déterminées lors du cycle d'initialisation, le dispositif de commande (MP) modifie la fréquence de la cadence d'échantillonnage pour le convertisseur analogique/numérique (AD) de telle sorte que lors du réenregistrement de l'annonce depuis la mémoire à bande magnétique (MSP) dans la mémoire numérique (SP), cette dernière est remplie à un degré important.

2. Équipement d'abonné, notamment répondeur téléphonique (AB), comportant un dispositif de commande, notamment un microprocesseur (MP), qui commande les différentes fonctions d'appareils de l'équipement d'abonné (AB) et l'échange d'informations techniques de commutation entre l'équipement d'abonné (AB) et le central du système de transmission d'informations, et comportant une mémoire à bande magnétique (MSP) et une mémoire numérique (SP) pour la mémorisation de signaux vocaux, un microphone (M) et un convertisseur analogique/numérique (AD) relié au microphone (M) et à la mémoire numérique (SP), l'annonce respective lorsqu'on parle dans le microphone (M) étant mémorisée dans la mémoire à bande magnétique (MSP),
caractérisé en ce
qu'au dispositif de commande (MP) est relié un compteur progressif/régressif (Z) qui, pendant un cycle d'initialisation, sert, conjointement avec le dispositif de commande (MP), à déterminer le temps de réponse du texte d'annonce, que le dispositif de commande (MP) représente la durée de conversation sur une unité d'affichage (AE) et que, sur la base des données déterminées lors du cycle d'initialisation, le dispositif de commande (MP) modifie les valeurs de la cadence d'échantillonnage pour le convertisseur analogique/numérique (AD) de telle sorte que lors du réenregistrement de l'annonce depuis la mémoire à bande magnétique (MSP) dans la mémoire numérique (SP), cette dernière est remplie à un degré important.

3. Équipement d'abonné selon la revendication 1 ou 2, caractérisé en ce qu'entre le convertisseur analogique/numérique (AD) et la mémoire à bande magnétique (MSP) est branché un commutateur (S) permettant de déclencher, par commande manuelle ou de façon automatique sous l'action du dispositif de commande (MP), une opération de réenregistrement.

4. Équipement d'abonné selon une ou plusieurs des revendications 1 à 3, caractérisé en ce que dans le convertisseur analogique/numérique (AD) est disposé un modulateur delta (DM), que la fréquence de la cadence d'échantillonnage envoyée au modulateur delta (DM) peut être commutée entre 32 kHz et 64 kHz et que, lors du réenregistrement du texte d'annonce, éventuellement seules des parties du texte d'annonce sont commutées entre les deux fréquences.
